# EUROPÄISCHE PATENTSCHRIFT

(11) **EP 2 047 132 B1**
(45) Veröffentlichungstag und Bekanntmachung des Hinweises auf die Patenterteilung: **02.06.2010**
(21) Anmeldenummer: 08759121.0
(22) Anmeldetag: 09.06.2008
(51) Int. Cl.: F16D 1/08, F16D 1/104, F16B 21/18, B65G 39/00

(54) **WELLE-NABE-BAUGRUPPE MIT SPREIZELEMENT**
SHAFT-HUB ASSEMBLY WITH EXPANSION ELEMENT
ENSEMBLE ARBRE-MOYEU COMPRENANT UN ÉLÉMENT À EXPANSION

(30) Priorität: 18.06.2007 DE 102007027934
(43) Veröffentlichungstag der Anmeldung: 15.04.2009
(73) Patentinhaber: Interroll Holding AG, 6592 Sant 'Antonino (CH)
(72) Erfinder: LINDEMANN, Harry, 42929 Wermelskirchen (DE)
(74) Vertreter: Müller-Boré & Partner Patentanwälte
(86) Internationale Anmeldenummer: PCT/EP2008/004591
(87) Internationale Veröffentlichungsnummer: WO 2008/155042

(56) Entgegenhaltungen:
- DE-C1- 3 842 905
- GB-A- 744 614
- GB-A- 858 931
- US-A- 4 136 982

## Beschreibung

### Gebiet der Erfindung

Die Erfindung bezieht sich auf eine Förderanlage mit einer Förderrolle welche eine Welle-Nabe-Baugruppe aufweist, eine solche Förderrolle und eine solche Welle-Nabe-Baugruppe.

### Hintergrund der Erfindung und Stand der Technik

Streckenförderer, wie z.B. Förderbänder, weisen in der Regel mehrere Transportrollen auf, die in einem Rahmen des Streckenförderers drehbar gelagert sind. Zum Teil weisen diese Transportrollen ein im Inneren der Rolle angeordnetes Wälzlagern auf, über welches die Transportrolle drehbar gelagert wird. Bei anderen Konstruktionsformen ist ein Wälzlager am Rahmen des Streckenförderers angeordnet und die Transportrollen weisen nur einen Achsstummel auf, der in dem Wälzlager gelagert ist.

Derartige Rollen sind Massenartikel, so dass bereits eine geringfügige Verbesserung bei der Herstellung der Transportrollen zu erheblichen Einspareffekten führen kann.

Bei direkt oder indirekt (z.B. über einen Fördergurt) angetriebenen Transportrollen stellt zudem der Spalt zwischen stillstehendem Rahmen und sich drehender Transportrolle eine Gefahrenstelle dar.

Eine Möglichkeit der Lagerung einer Transportrolle, die auch zu einer Entschärfung der Gefahrenstelle beiträgt ist z.B. in der deutschen Patentschrift DE 33 08 262 C1 offenbart. In dieser Druckschrift wird eine Transportrolle offenbart, bei der der Trommelmantel axial über eine Achse hinaus vorsteht. Dabei ist die Transportrolle in einem Lagerprofil über ein blockartiges Lagerelement gelagert, welches in den vorstehenden Trommelmantel hineinragt. Dabei wird der Spalt zwischen feststehendem und sich drehendem Teil durch den vorstehenden Trommelmantel abgedeckt. Bei der dargestellten Transportrolle ist die Achse in ein kreisrundes Blechteil mit einem mittigen Loch eingeschweißt, und das Blechteil wiederum ist in dem Trommelmantel eingeschweißt.

Die US-A-4 136 982 beschreibt eine Befestigungsbaugruppe mit einer Welle und einem Element mit einer Öffnung. Die Welle weist eine sich in Längsrichtung erstreckende äußere Keilverzahnung und eine ringförmige Nut, die sich im Bereich eines der Enden der Welle um eine zentrale Achse der Welle erstreckt. Das Element mit der Öffnung weist eine Innenverzahnung und eine korrespondierende mittige ringförmige Nut auf, die sich von der Keilverzahnung radial nach außen erstreckt. In der Nut der Welle ist ein Federring angeordnet.

Sowohl die DE 36 22 312 C2 als auch die DE 28 46 103 A1 offenbaren Klemmsicherungen, welche mit radial nach innen weisenden Klemmschneiden eine Sicherung gegen Verschieben in einer axialer Richtung bewirken. In der DE 36 22 312 C2 wird beschrieben, daß ein möglicher Einsatzzweck der Klemmsicherung die Fixierung einer Welle in einem Stütz- oder Pufferring für Tragrollen in Gurtförderanlagen sein kann.

Die Herstellung einer solchen Transportrolle ist verhältnismäßig aufwändig und teuer.

### Aufgabe

Es ist eine Aufgabe der Erfindung, eine Förderanlage mit einer Förderrolle, eine solche Förderrolle und eine Konstruktionsform für eine Welle-Nabe-Baugruppe bereitzustellen, durch welche eine solche Förderrolle gelagert werden kann, die eine verlässliche Lagerung sicher stellt und einfach herzustellen ist. Ferner ist es Aufgabe der Erfindung, eine solche Förderanlage mit einem Fördergurt zu schaffen, bei der die Gefahrenstelle zwischen Förderrolle und benachbarten feststehenden Teilen entschärft ist.

### Lösung der Aufgabe

Die Aufgabe wird durch die Vorrichtungen gemäß den nebengeordneten Ansprüche gelöst. Vorteilhafte Ausführungsformen sind in den Unteransprüchen offenbart.

Ein Aspekt der Erfindung betrifft eine Welle-Nabe-Baugruppe, aufweisend einen Achsbolzen, ein Spreizelement und eine Nabe, wobei der Achsbolzen einen Achsbereich mit einem Achsquerschnitt aufweist, der im Wesentlichen einem Nabenquerschnitt eines korrespondierenden Nabenbereichs der Nabe entspricht, derart, dass der zum Teil oder vollständig in der Nabe angeordnete Achsbolzen relativ zur Nabe in radialer Richtung fixiert ist, wobei der Achsbolzen einen Achsdrehschlussbereich aufweist und die Nabe einen Nabendrehschlussbereich aufweist, wobei Achsdrehschlussbereich und Nabendrehschlussbereich derart gestaltet sind, dass der in der Nabe angeordnete Achsbolzen relativ zu der Nabe gegen Verdrehung in Umfangsrichtung fixiert ist, und wobei das Spreizelement an dem Achsbolzen angeordnet ist, einen Außenumfangsbereich aufweist und derart gestaltet ist, dass der Außenumfangsbereich im entspannten Zustand des Spreizelements einen Außendurchmesser aufweist, der größer ist als ein Innendurchmesser eines korrespondierenden Innenumfangsbereichs der Nabe, wobei das Spreizelement, wenn der Achsbolzen in der Nabe angeordnet ist, derart elastisch verformt ist, dass der Außenumfangsbereich des Spreizelements von der entspannten Position des Spreizelements in axialer Richtung des Achsbolzens verlagert ist und wobei mit der axialen Verlagerung des Außenumfangsbereichs des Spreizelements eine Verkleinerung des Außendurchmessers des Außenumfangsbereichs des Spreizelements derart gekoppelt ist, dass der verkleinerte Außendurchmesser des Spreizelements dem Innendurchmesser des korrespondierenden Innenumfangsbereichs der Nabe entspricht und an diesem vorgespannt anliegt.

Dabei weisen Achsbereich und Nabenbereich bevorzugt eine im Wesentlichen allgemeinzylindrische Gestaltung auf, das heißt die korrespondierenden Oberflächen können im Wesentlichen als Oberflächen beschrieben werden, die jeweils durch die Parallelverschiebung einer Geraden, die parallel zur Achse des Achsbolzens verläuft, entlang einer geschlossenen beliebigen Kurve im Raum erzeugt wird.
Dadurch wird gewährleistet, dass Achsbereich und Nabenbereich bei der Montage einfach ineinander geschoben werden können. Besonders einfach herzustellen sind die beiden Bereiche, wenn sie einen im Wesentlichen kreiszylindrischen Querschnitt haben. Querschnittsformen, die von der kreiszylindrischen Form abweichen, weisen dagegen den Vorteil auf, dass diese gleichzeitig die Funktion des Achsdrehschlussbereichs beziehungsweise Nabendrehschlussbereichs verwirklichen, ohne Nabe und Achsbolzen miteinander verpressen oder zusätzliche Bauelemente vorsehen zu müssen. Die axiale Verlagerung des Außenumfangsbereichs, die mit einer Verkleinerung des Außendurchmessers gekoppelt ist, beschreibt eine kombinierte Bewegung des Außendurchmessers, welche eine axiale Komponente und eine radiale Komponente aufweist. Dabei erfolgt die Verlagerung in axialer Richtung entgegen der Einführrichtung des Achsbolzens in die Nabe. Durch eine solche Bewegung, die schräg zur Achse des Achsbolzens verläuft, wird eine Fixierung des Achsbolzens in der Nabe bewirkt. Die Begriffe Welle, Nabe und Achsbolzen bezeichnen in der hier verwendeten Form Bauteile, die Drehmomente übertragen, genauso wie Bauteile, die kein Drehmoment übertragen.

Gemäß dem oben beschriebenen Aspekt sind das Spreizelement und der korrespondierende Innenumfangsbereich der Nabe derart gestaltet, dass aufgrund des Reibbeiwerts zwischen Spreizelement und Innenumfangsbereich und durch einen Anstellwinkel zwischen den verlagerten Bereichen des Spreizelements, an deren radialen Enden der Außenumfangsbereich des Spreizelements angeordnet ist, und dem Innenumfangsbereich des Spreizelement eine Selbsthemmung des Spreizelements in der Nabe erzeugt wird. Die verlagerten Bereiche des Spreizelements können z.B. bevorzugt als fingerartige Fortsätze ausgebildet sein, wobei deren Enden den Außenumfangsbereich darstellen und wobei die Seiten der fingerartigen Fortsätze, die dem Außenumfangsbereich gegenüberliegen, an einer Spreizelementbasis angebracht sind. Ein derartiger fingerartiger Fortsatz wird im Rahmen der elastischen Verformung im Wesentlichen im Bereich des Anbringungspunktes an der Spreizelementbasis verformt, so dass der restliche Teil des fingerartigen Fortsatzes im Wesentlichen unverformt als verlagerter Bereich des Spreizelements um den Anstellwinkel verschwenkt wird. Dabei vollzieht der Bereich des fingerartigen Fortsatzes, der als Außenumfangsbereich bezeichnet wird, die beschriebene, kombinierte Bewegung in axialer und radialer Richtung. Der Begriff Selbsthemmung bedeutet, dass beim Aufbringen einer Kraft auf den Achsbolzen in axialer Richtung entgegen einer Einführrichtung des Achsbolzens eine aus dieser Kraft resultierende Normalkraft zwischen dem Außenumfangsbereich des Spreizelementes und dem Innenumfangsbereich der Nabe erzeugt wird, die unter Berücksichtigung des Reibbeiwerts zwischen dem Außenumfangsbereich des Spreizelementes und dem Innenumfangsbereich der Nabe in einer Reibkraft resultiert, welche größer ist als die Kraft auf den Achsbolzen in axialer Richtung entgegen der Einführrichtung des Achsbolzens (unter Vernachlässigung der Reibungskraft, welche durch die Federkraft des Spreizelementes bereitgestellt wird).
Durch diese Gestaltung kann der Achsbolzen mit dem Spreizelement in die Nabe geschoben werden und ist in der eingeschobenen Position in der Nabe in eine Richtung entgegen der Einführrichtung arretiert. Alternativ oder zusätzlich kann die Arretierung dadurch bewirkt werden, dass die Materialpaarung zwischen Material des Spreizelements und Material der Nabe derart gewählt ist, dass der Außenumfangsbereich des Spreizelements beim Einspreizen in die Oberfläche des Innenumfangsbereichs der Nabe eindringen kann, so dass der Selbsthemmungseffekt durch einen Formschluss ersetzt oder verstärkt wird. Dabei ist der Außenumfangsbereich des Spreizelements bevorzugt derartig scharfkantig ausgeführt, dass ein Eindringen in die Oberfläche des Innenumfangsbereichs der Nabe erleichtert wird.

Bevorzugt ist ferner eine Ausführungsform der Welle-Nabe-Baugruppe, bei der das Spreizelement als Scheibe oder als bevorzugt geschlossener Ring ausgestaltet ist, wobei das Spreizelement umfänglich voneinander beabstandete Schlitze aufweist, welche sich vom Außenumfangsbereich ausgehend im Wesentlichen radial derart nach innen erstrecken, dass der Außenumfangsbereich durch die Enden einer Anzahl fingerartiger Fortsätze gebildet wird, die in Umfangsrichtung durch Schlitze voneinander getrennt sind. Dabei kann das bevorzugt als geschlossener Ring ausgestaltete Spreizelement z.B. die Grundform einer Beilagscheibe aufweisen, welche von außen nach innen gerichtete Schlitze aufweist. Eine solche geschlitzte Beilagscheibe weist im entspannten Zustand im Wesentlichen eine ebene Form auf.
Denkbar ist ebenfalls, dass das Spreizelement bereits im entspannten Zustand eine tellerartige Grundform hat, bei der der Tellerrand eine im Wesentlichen konische Form aufweist. Eine derartige Gestaltung erleichtert das Einschieben des Achsbolzens mit dem Spreizelement in die Nabe. Die Schlitze verlaufen in beiden Fällen bevorzugt im Wesentlichen radial von außen nach innen oder weisen eine im Wesentlichen V-förmige Form auf. Denkbar sind auch andere Formen der Schlitze wie z.B. spiralförmig nach innen verlaufende Ausnehmungen.

Eine weitere vorteilhafte Ausführungsform bezieht sich auf eine Welle-Nabe-Baugruppe, bei der das Spreizelement an dem Achsbolzen bevorzugt an einem axialen Ende des Achsbolzens angeordnet ist und/oder durch Annieten, Anschweißen, Anschrauben oder eine sonstige Befestigungsart an dem Achsbolzen befestigt ist. Dabei erfolgt die Befestigung bevorzugt derart, dass das Spreizelement im Wesentlichen kein axiales Spiel, bevorzugt aber ein radiales Spiel aufweist. Ein radiales Spiel bewirkt vorteilhaft, dass sich das Spreizelement, unabhängig von einer präzisen rotationssymmetrischen Anordnung im Verhältnis zur Achse des Achsbolzens, beim Einsetzen in die Nabe gleichmäßig einspreizen kann. Auf diese Weise wird eine Doppelpassung vermieden.

Vorzugsweise weist eine solche Welle-Nabe-Baugruppe eine Gestaltung auf, bei welcher der Achsbolzenbereich des Achsbolzens, der in der Nabe aufgenommen wird, im Wesentlichen kreiszylindrisch ausgebildet ist und wobei der Durchmesser des Achsbolzenbereichs und ein Durchmesser eines korrespondierenden Nabenaufnahmebereichs der Nabe eine Schiebepassung, eine leichte Presspassung oder eine Presspassung bilden, welche z. B. die Passungen H7-g8 oder H7-p8 umfassen. Die kreiszylindrische Gestaltung ist besonders einfach und daher günstig herzustellen. Eine Schiebepassung ist dabei insbesondere leicht zu montieren. Aufgrund des Spreizelementes ist eine Übermaßpassung zur Fixierung des Achsbolzens in der Nabe nicht erforderlich. Eine leichte Presspassung kann aber vorteilhaft sein, wenn keine oder nur geringe Drehmomente übertragen werden sollen, da durch eine leichte Presspassung in diesem Fall ein in der Herstellung aufwändiger Formschluss vermieden werden kann.

Bevorzugt ist ferner eine solche Welle-Nabe-Baugruppe, bei welcher der Durchmesser der Nabe im Wesentlichen über die gesamte Einschublänge des Achsbolzens denselben Durchmesser aufweist. Bei dieser Gestaltung sind Achsbereich beziehungsweise Nabenbereich zumindest teilweise identisch mit dem Achsdrehschlussbereich und dem Nabendrehschlussbereich. Dabei wird ein Drehschluss bevorzugt über eine Presspassung erzielt.

Eine weitere vorteilhafte Ausführungsform betrifft eine solche Welle-Nabe-Baugruppe, bei welcher der Drehschlussbereich zwischen Achsbolzen und Nabe als Formschlussbereich gestaltet ist. Bevorzugt wird ein solcher Formschlussbereich durch eine Passfeder erzielt, die als gesondertes Element in einer Nut des Achsbolzens sowie in einer Nut der Nabe angeordnet ist. Denkbar sind auch andere Gestaltungsformen eines Formschlusses, z.B. einen nicht rotationssymmetrische Ausgestaltung der korrespondierenden Querschnitte von Achsbolzen und Nabe z.B. in Form eines Keilwellenprofils.

Weiterhin bevorzugt ist eine Gestaltung einer Welle-Nabe-Baugruppe, bei der das Spreizelement aus Stahl hergestellt ist. Bevorzugt ist das Spreizelement aus gehärtetem Federstahl hergestellt. Aufgrund der Härte von Federstahl kann sich das Spreizelement in weicheren Materialien der Nabe einfach einspreizen. Dabei kann die Nabe z.B. aus nicht gehärtetem Stahl, Aluminium oder Kunststoff bestehen, beziehungsweise solche Materialien aufweisen. Bei weicheren Materialien wie z.B. Kunststoff oder Aluminium kann es ausreichend sein, wenn das Spreizelement aus nicht gehärtetem Stahl oder einem anderen Metall hergestellt ist, da auch diese Materialien des Spreizelementes im Verhältnis zum jeweiligen Nabenmaterial eine ausreichende Elastizität und Härte aufweisen können. Denkbar sind ebenfalls andere Materialien, welche eine ausreichende Elastizität und Härte aufweisen.

Ferner weist eine solche Welle-Nabe-Baugruppe bevorzugt eine Gestaltung auf, bei der die Nabe aus einer Aluminiumlegierung hergestellt ist. Aluminium beziehungsweise eine Aluminiumlegierung weist den Vorteil auf, dass dieses Material einfach, z.B. im Stranggussverfahren, hergestellt beziehungsweise extrudiert werden kann. Dabei ist es möglich, die Nabe zusammen mit einem Trommelmantel und eventuell dazwischen erforderlichen Verstrebungen in einem Arbeitsgang herzustellen.

Ein weiterer Aspekt der Erfindung betrifft eine Förderrolle für eine Förderanlage welche eine vorstehend beschriebene Welle-Nabe-Baugruppe aufweist.

Noch ein weiterer Aspekt der Erfindung betrifft eine Förderanlage, welche eine solche Förderrolle aufweist.

Bevorzugt ist ferner eine Ausführungsform der Förderanlage, bei der die Förderanlage als Gurtförderanlage ausgebildet ist und einen Fördergurt aufweist, welcher die Förderrolle zumindest teilweise umschlingt.

Eine weitere vorteilhafte Ausführungsform bezieht sich auf eine Förderanlage, bei der die Förderrolle auf zumindest einer Seite über einen Lagertopf gelagert ist, der einen Radius aufweist, der zumindest über einen Umschlingungsbereich des Fördergurtes im Wesentlichen gleich oder etwas kleiner ausgebildet ist als der Radius der Förderrolle im axialen Endbereich der Förderrolle, wobei der Fördergurt breiter ist als die Länge der Förderrolle in axialer Richtung und wobei der Fördergurt auf der Förderrolle derart angeordnet ist, dass der Spalt zwischen Förderrolle und Lagertopf von dem Fördergurt abgedeckt wird. Der Umschlingungsbereich ist abhängig von dem Grad der Umlenkung des Förderbandes an der Förderrolle. Wird die Förderrolle als Umlenkrolle am Ende eines Förderbandes verwendet, kann der Umschlingungsbereich 180° oder mehr betragen. Im Fall einer Förderrolle, welche zwischen den Enden eines Förderbandes eingesetzt wird, kann der Umschlingungsbereich nur in einem Umfangspunkt im Querschnitt bzw. linienförmig in Längsrichtung der Transportrolle verlaufend gegeben sein. Über den Lagertopf wird die Förderrolle in einem Rahmen der Förderanlage befestigt. Dabei wird der Spalt, der bei herkömmlicher Lagerung zwischen dem Rahmen und der Förderrolle bestehen würde, in Richtung der Rollenmitte der Förderrolle verlagert. Dabei hat sich überraschend herausgestellt, dass je nach Gestaltung des Lagertopfes, beziehungsweise der Förderrolle, die Relativbewegung zwischen dem Fördergurt, welcher über die Oberfläche des Lagertopfes gleitend abgetragen wird, nicht zu einer ungewünschten Abnutzung des Fördergurtes führt. Dies lässt sich dadurch erklären, dass insbesondere bei einem größeren Durchmesser der Förderrolle im Rollenendbereich der Förderrolle gegenüber dem Durchmesser des Lagertopfes die Gurtspannung im Bereich des Lagertopfes vernachlässigt werden Raum. Dieser Effekt ist ebenfalls zu beobachten, wenn der Radius des Lagertopfes im Umschlingungsbereich dem Radius der Förderrolle im Rollenendbereich im Wesentlichen gleich ist, wenn die Förderrolle ballig ausgeführt ist, also einen größeren Durchmesser im Rollenmittelbereich aufweist als im Rollenendbereich. Unabhängig von der Gestaltung der Radien beziehungsweise Durchmesser von Lagertopf und Förderrolle können Abnutzungserscheinungen auch durch eine besonders glatte Oberflächengestaltung des Lagertopfes und/oder eine entsprechende Wahl der Materialien von Lagertopf und Fördergurt verringert oder sogar verhindert werden. Bevorzugt wird der Lagertopf aus Stahl hergestellt. Dabei ist die Förderrolle bevorzugt auf beiden Seiten über je einen Lagertopf gelagert.

Vorzugsweise weist eine solche Förderanlage eine Gestaltung auf, bei welcher der Lagertopf im Umschlingungsbereich einen Radius aufweist, der zwischen 0,3 mm und 2,5 mm kleiner ist als der Radius der Förderrolle im axialen Endbereich der Förderrolle.

Bevorzugt ist ferner eine solche Förderanlage, bei welcher der Lagertopf im Umschlingungsbereich eine Rauhtiefe von z.B. Ra 3,2 oder Ra 6,3 aufweist, wobei die Rauhtiefe Ra 6,3 besonders bevorzugt ist.

Eine weitere vorteilhafte Ausführungsform betrifft eine solche Förderanlage, bei welcher die Förderrolle ballig ausgeführt ist, wobei der Rollenmitteldurchmesser im Rollenmittelbereich der Förderrolle zwischen 1 mm und 2 mm, bevorzugter etwa 1,5 mm größer ist als der Rollenenddurchmesser der Förderrolle in einem Rollenendbereich. Mit dem Begriff Rollenendbereich wird der Bereich eines der axialen Enden der Förderrolle bezeichnet. Der Begriff ballig, wie er vorliegend verwendet wird, umfaßt sowohl eine abgerundete konvexe Gestaltung der Oberfläche als auch eine bevorzugte Gestaltung, bei der die Transportrolle zwei im Wesentlichen konische Bereiche aufweist, die sich an den Rollenendbereichen beginnend zur Mitte der Transportrolle hin aufweiten und im Mittelbereich der Rolle durch einen im Wesentlich kreiszylindrischen Bereich miteinander verbunden werden, wobei bevorzugt die axiale Länge jedes der drei Bereiche im Wesentlichen einem Drittel der Rollenlänge entspricht.

Weiterhin bevorzugt ist eine Gestaltung einer Förderanlage, bei der zumindest ein Lager über welches die Förderrolle drehbar gelagert ist in dem Lagertopf aufgenommen ist. Dabei ist die Förderrolle bevorzugt auf beiden Seiten über je ein Pendelkugellager in je einem Lagertopf gelagert.

Ferner weist eine solche Förderanlage bevorzugt eine Gestaltung auf, bei welcher der Achsbolzen auf der dem Spreizelement in axialer Richtung gegenüberliegenden Seite einen Lagerbereich aufweist, der in axialer Richtung über den Rollenendbereich der Förderrolle übersteht und in diesem Bereich einen mit dem Lagerinnenring des Wälzlagers korrespondierenden Lagerdurchmesser aufweist.

Im Folgenden werden einzelne besonders bevorzugte Ausführungsformen der Erfindung beispielhaft beschrieben. Dabei weisen die einzelnen beschriebenen Ausführungsformen zum Teil Merkmale auf, die nicht zwingend erforderlich sind, um die vorliegende Erfindung auszuführen, die aber im Allgemeinen als bevorzugt angesehen werden. So sollen auch Ausführungsformen als unter die Lehre der Erfindung fallend offenbart angesehen werden, die nicht alle Merkmale der im Folgenden beschriebenen Ausführungsformen aufweisen. Genauso ist es denkbar, Merkmale, die in Bezug auf unterschiedliche Ausführungsformen beschrieben werden, selektiv miteinander zu kombinieren.

### Kurze Beschreibung der Zeichnungen

- Figur 1: zeigt eine isometrische Ansicht einer Förderanlage im Teilschnitt.
- Figur 2: zeigt die Förderanlage aus Figur 1 in einer stirnseitigen Sicht im Teilschnitt.
- Figur 3: zeigt eine vergrößerte Ansicht der Förderanlage aus Figur 2.
- Figur 4: zeigt eine Baugruppe der Förderanlage mit zwei Lagertöpfen und einer Förderrolle mit freigeschnittenen Bereichen und einer Querschnittsansicht durch die Förderrolle.
- Figur 5: zeigt eine isometrische Ansicht eines Achsbolzens mit einem daran angeordneten Spreizelement.
- Figur 6a: zeigt eine isometrische Schnittansicht des Spreizelementes.
- Figur 6b: zeigt Detail A aus Figur 6a.

### Detaillierte Beschreibung der Zeichnung

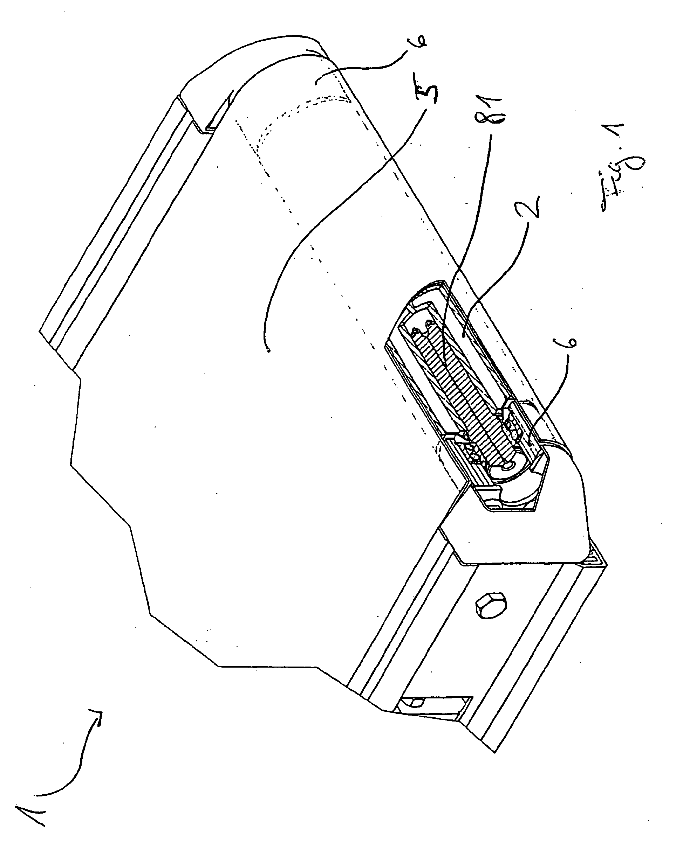

Figur 1 zeigt eine isometrische Ansicht einer Förderanlage 1 im Teilschnitt.

Die Förderanlage 1 ist als Gurtförderer ausgebildet. Figur 1 zeigt den Umlenkbereich eines Fördergurtes 5, der über eine Förderrolle 2 um 180° umgelenkt wird. Demnach steht der Fördergurt 5 über einen Umschlingungswinkel von circa 180° mit der Förderrolle 2 in Kontakt.

Die Förderrolle 2 ist zwischen zwei Lagertöpfen 6 drehbar gelagert. Die Lagertöpfe 6 sind drehfest an einem Rahmen befestigt. Im Betrieb dreht sich daher die Förderrolle 2 relativ zu den Lagertöpfen 6 beziehungsweise zu dem Rahmen der Förderanlage 1.

Zur Lagerung der Förderrolle 2 ist in den feststehenden Lagertöpfen 6 jeweils ein Lager 61 vorgesehen, das in der vorliegenden bevorzugten Ausführungsform als Wälzlager, insbesondere als Pendelkugellager, ausgeführt ist. Dabei wird die Förderrolle 2 über jeweils einen Achsbolzen 81 in den Lagern 61 gelagert.

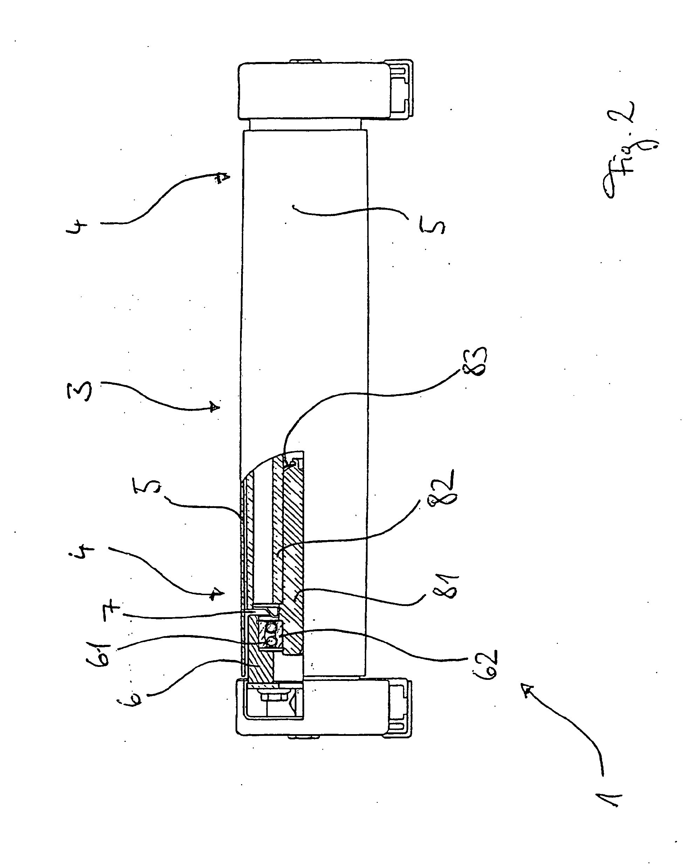

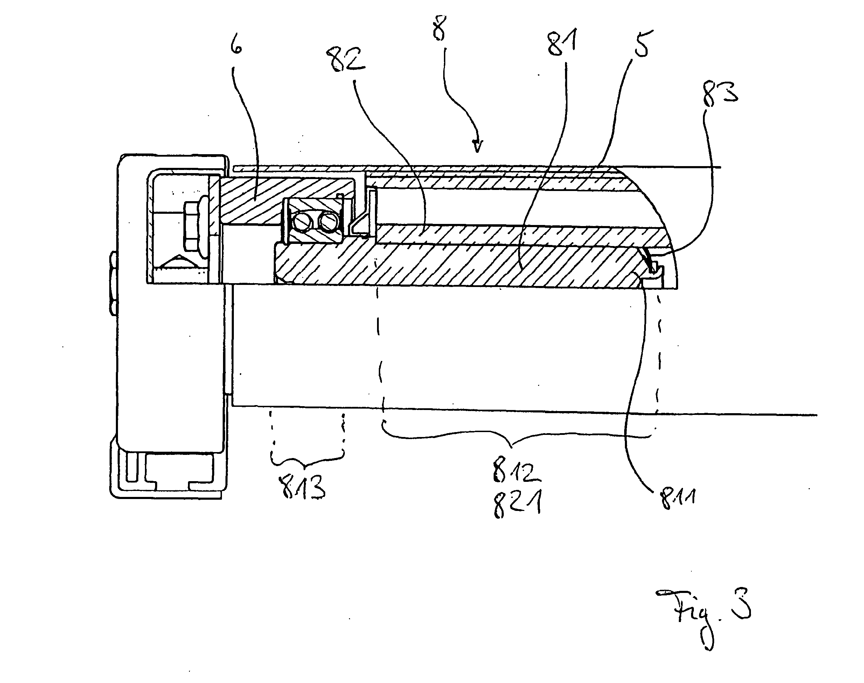

Figur 2 zeigt die Förderanlage 1 aus Figur 1 in einer stirnseitigen Sicht im Teilschnitt, und Figur 3 zeigt eine vergrößerte Ansicht der Förderanlage 1 aus Figur 2. Die Figuren zeigen jeweils dieselbe Ausführungsform der bevorzugten Förderanlage 1. Daher werden für die gleichen Teile jeweils die gleichen Bezugszeichen verwendet.

In Figur 3 ist der Achsbolzen 81 in einem Teilschnitt der Förderanlage 1 dargestellt.
Dabei ist ersichtlich, dass der Achsbolzen 81 einen Achsbolzenbereich 812 aufweist, der in einem Nabenaufnahmebereich 821 einer Nabe 82 aufgenommen ist. In der dargestellten bevorzugten Ausführungsform ist der Achsbolzenbereich 812 als im Wesentlichen kreiszylindrischer Körper ausgebildet und in den ebenfalls als kreiszylindrisches Loch ausgebildeten Nabenaufnahmebereich 821 der Nabe 82 eingeschoben. Dabei sind die Toleranzen des Nabenaufnahmebereichs 821 und des Achsbolzenbereichs 812 als leichte Presspassung bemessen. Um einen sicheren Sitz des Achsbolzens 81 in der Nabe 82 zu gewährleisten, ist an einem axialen Ende 811 des Achsbolzens 81 ein Spreizelement 83 vorgesehen, welches bevorzugt eine unlösbare Verbindung zwischen Achsbolzen 81 und Förderrolle 2 gewährleistet.

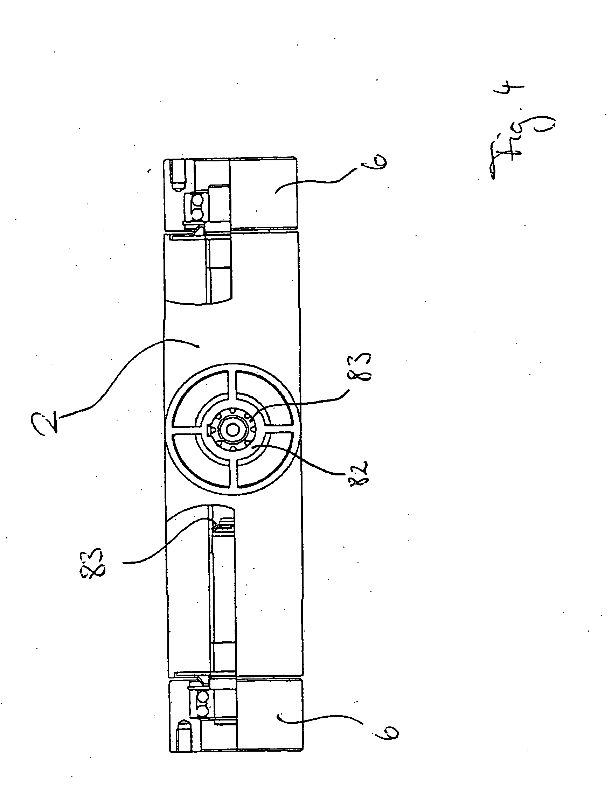

Der Querschnitt der bevorzugten Förderrolle 2 ist in Figur 4 dargestellt.

Figur 4 zeigt eine Baugruppe der Förderanlage 1 mit zwei Lagertöpfen 6 und einer Förderrolle 2 mit freigeschnittenen Bereichen und einer Querschnittsansicht durch die Förderrolle 2.

Dabei ist in Figur 4 gezeigt, dass die Nabe 82, ein Förderrollenmantel der Förderrolle 2 und Verbindungsstege zwischen der Nabe 82 und dem Förderrollenmantel einteilig hergestellt sind. Die Herstellung einer solchen Förderrolle 2 kann z.B. im Stranggussverfahren erfolgen. Ein bevorzugtes Material für die Förderrolle 2 ist Aluminium oder einer Aluminiumlegierung. Denkbar ist ebenfalls, die Förderrolle 2 in einer beliebigen anderen Form herzustellen, z.B. aus mehreren Teilen zusammenzusetzen. Eine im Stranggussverfahren hergestellte Förderrolle 2 weist über die gesamte Länge der Förderrolle 2 im Wesentlichen den gleichen Querschnitt auf. Eine Balligkeit der Förderrolle 2, die eine bevorzugte Form der Förderrolle 2 darstellt, wird bevorzugt in einem Bearbeitungsschritt durch Überdrehen der Mantelfläche der Förderrolle 2 erzeugt.

Die Balligkeit der Förderrolle 2 bewirkt vorteilhaft, dass ein Fördergurt, welcher über die Förderrolle 2 umgelenkt oder gestützt wird, zentriert wird und nicht in axialer Richtung von der Förderrolle abwandert. In der bevorzugten Ausführungsform mit den zwei Lagertöpfen 6, über welche die Förderrolle 2 drehbar gelagert ist, weist die Balligkeit der Förderrolle 2 ferner den Vorteil auf, dass die Randbereiche des Fördergurtes 5 im wesentlichen spannungsfrei bleiben.

Wie in Figur 3 ersichtlich ist, weist der Lagertopf 6 einen etwas kleineren Durchmesser als der benachbarte Rollenendbereich 4 der Förderrolle 2 auf. Diese Gestaltung trägt zusätzlich zu der Balligkeit der Förderrolle 2 zu einer Reduzierung der Reibung zwischen Fördergurt 5 und Lagertopf 6 bei.

In einer besonders bevorzugten Ausführungsform ist der Lagertopf 6 zumindest in dem Umschlingungsbereich des Fördergurtes 5 mit einer glatten Oberfläche versehen, so dass eine unerwünschte Reibung weiter reduziert werden kann. Eine bevorzugte Rauhtiefe, mit der der Lagertopf 6 zumindest in diesem Bereich versehen ist, liegt bei Ra 6,3.

Wie ebenfalls in Figur 3 ersichtlich ist, ist der Achsbolzen 81 auf der dem Spreizelement 83 gegenüberliegenden Seite mit einem Lagerbereich 813 versehen, der ebenfalls bevorzugt kreiszylindrisch ausgebildet ist und einen Durchmesser aufweist, der mit dem Lagerinnenring 62 des Lagers 61 eine gewünschte Passung bildet. Dabei ist bevorzugt der Lagerbereich 813 auf einer Seite der Förderrolle 2 als Festlager und auf der anderen Seite der Förderrolle 2 als Loslager ausgebildet.

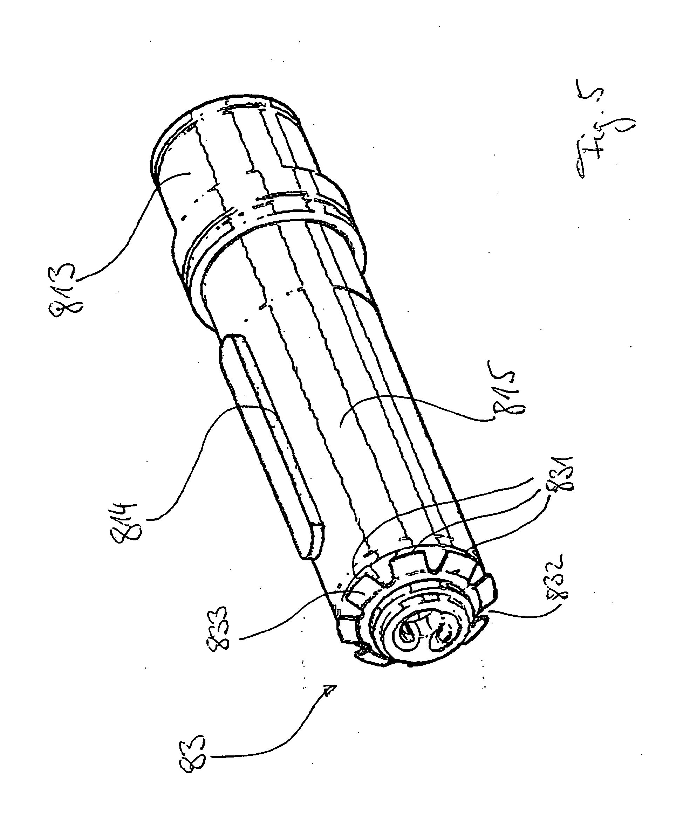

Figur 5 zeigt eine isometrische Ansicht des Achsbolzens 81 mit einem daran angeordneten Spreizelement 83.

In dieser Figur ist gut ersichtlich, dass an dem Achsbolzen 81 ein Achsdrehschlussbereich 814 vorgesehen ist, der in der dargestellten bevorzugten Ausführungsform über eine Nut in dem Achsbolzen 81 ausgebildet ist, in den eine Passfeder eingesetzt ist. In der dargestellten Ausführungsform ist ferner ersichtlich, dass zwischen Lagerbereich 813 und Achsbereich 815 ein Bund mit einem größeren Durchmesser vorgesehen ist, der als Anschlag in beide Richtungen dient.

Ebenfalls ist denkbar, anstelle einer Passfeder eine Presspassung zwischen Achsbolzen 81 und Nabe 82 vorzusehen. Denkbar sind auch andere Ausführungen über die ein Drehschluss zwischen Nabe 82 und Achsbolzen 81 gewährleistet wird.
Insbesondere bei nicht angetriebenen Förderrollen 2 oder bei Förderrollen, die nur ein geringes Drehmoment übertragen müssen, genügt eine leichte Presspassung, die auch zwischen dem Achsbolzen 81 und der bevorzugt aus einer Aluminiumlegierung hergestellten Nabe 82 erzeugt werden kann.

Das Spreizelement 83 ist an einem axialen Ende 811 des Achsbolzens 81 angeordnet. In der dargestellten bevorzugten Ausführungsform ist das Spreizelement 83 an dem Achsbolzen 81 angenietet. Denkbar ist ebenfalls, dass Spreizelement 83 auf andere Art und Weise an dem Achsbolzen zu befestigen, z.B. durch Schrauben, Schweißen etc.

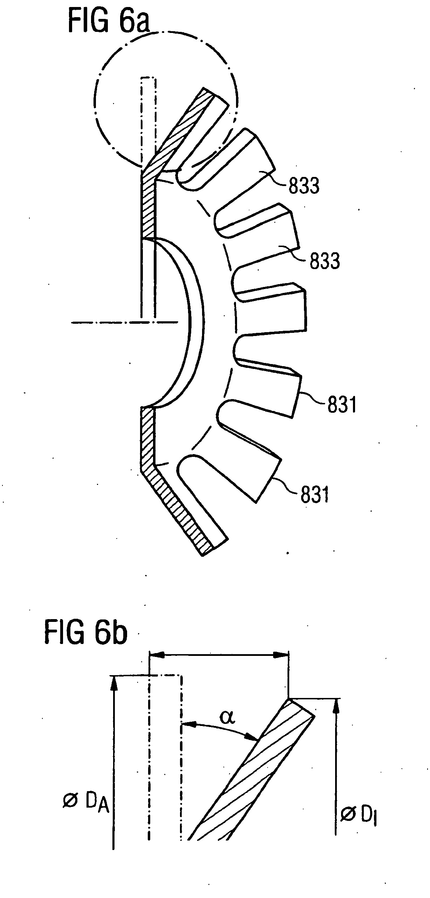

Figur 6a zeigt eine isometrische Schnittansicht eines bevorzugten Spreizelementes 83, dass auch in Figur 5 dargestellt ist.

Dabei ist in Figur 6a gezeigt, dass die Grundform des bevorzugten Spreizelementes 83 im Wesentlichen der Form eines Tellers entspricht, bei dem die Ränder des Tellers konisch ausgebildet sind. In der Mitte des Spreizelementes 83 ist bevorzugt ein Loch angeordnet, durch welches ein Niet oder eine Schraube zur Befestigung gesteckt werden können.

In der dargestellten bevorzugten Ausführungsform ist das Spreizelement 83 um das Loch als geschlossener Ring ausgeführt, von dem aus sich fingerartige Fortsätze 833 in radialer Richtung nach außen erstrecken. Anders formuliert erstrecken sich Schlitze 832 von einem Außenumfangsbereich 831 des Spreizelementes 83 nach innen und trennen den Umfangsbereich in Teilabschnitte auf. Die Schlitze 832 können, wie in der dargestellten bevorzugten Ausführungsform gezeigt, eine V-förmige Gestalt besitzen und sich im Wesentlichen radial nach innen erstrecken.
Denkbar sind ebenfalls andere Ausführungsformen, bei denen sich Schlitze alternativ oder zusätzlich von innen nach außen erstrecken, so dass der Ring im Wesentlichen zickzackförmig verläuft. Ebenfalls ist denkbar, den Ring nicht als geschlossenen Ring sondern als an einer Stelle durchgehend geschlitzten Ring mit zwei offenen Enden auszuformen.

In der dargestellten bevorzugten Ausführungsform erstrecken sich die Schlitze 832 im Wesentlichen ausgehend vom Außenumfangsbereich 831 bis zu einem Knick, der zwischen dem Tellerrand und der ebenen Tellerfläche ausgebildet ist, nach innen. Denkbar ist ebenfalls, dass die Schlitze weiter zum Mittelpunkt des Spreizelements 83 führen oder kürzer ausgebildet sind.

Figur 6b zeigt ein Detail A aus Figur 6 a.

In dieser Figur ist mit gestrichelter Linie die Position des fingerartigen Fortsatzes 833 dargestellt, in der sich der Finger in einer ebenen Gestaltung des Spreizelements 83 im entspannten Zustand befinden würde (bei fingierter ebener Gestaltung). Aus dieser entspannten Position kann der fingerartige Fortsatz 833 um einen Winkel α in eine gespannte Position verlagert werden, die in Figur 6b als schraffierter Bereich dargestellt ist. Bei der bevorzugten Ausführungsform des tellerartigen Spreizelements 83 würde die entspannte Position zwischen den beiden dargestellten Positionen liegen. In beiden Fällen ist ersichtlich, dass das Spreizelement 83 in seiner gespannten Position einen Durchmesser D_{I} aufweist, der dem Durchmesser des Innenumfangsbereichs der Nabe 82 entspricht. Ein solcher Durchmesser DI kann z.B. im Bereich von 31,3 mm liegen. Ferner weist das Spreizelement 83 in seinem entspannten Zustand einen Durchmesser auf, der größer ist als der Durchmesser D_{I}. Ein solcher Durchmesser D_{A} kann z.B. im Bereich von 31,7 mm liegen.

Beim Einschieben des Achsbolzens 81 in die Nabe 82 werden die fingerartigen Fortsätze 833 verlagert und kommen vorgespannt am Innenumfangsbereich der Nabe 82 zum Anliegen. Durch die Reibung zwischen dem Außenumfangsbereich 831 des Spreizelements 83 und dem Innenumfangsbereich der Nabe 82 wird eine Reibungskraft erzeugt, die bewirkt, wenn der Achsbolzen 81 aus der Nabe 82 gezogen werden soll, dass die fingerartigen Fortsätze 833 in Richtung ihrer entspannten Position gedrückt werden. Einhergehend mit dieser Kraft wird auch der Anpressdruck zwischen dem Außenumfangsbereich 831 und den Innenumfangsbereich der Nabe 82 erhöht, da mit der Rückverlagerung in die entspannte Positionen eine Vergrößerung des Durchmessers einher gehen würde.
Durch diese Gestaltung wird bewirkt, dass die Reibungskraft zwischen dem Außenumfangsbereich 831 und Innenumfangsbereich der Nabe 82 bevorzugt immer größer ist als die Kraft, welche auf den Achsbolzen 81 ausgeübt wird.

Dieser Effekt kann dadurch verstärkt werden, dass der Außenumfangsbereich 831 scharfkantig ausgebildet wird, so dass, insbesondere wenn das Material des Spreizelementes 83 härter ist als das Material der Nabe 82, der Außenumfangsbereich 831 in den Innenumfangsbereich der Nabe 82 eindringen kann. Durch diesen Effekt kann zusätzlich zu dem Reibschluss ein Formschluss auftreten, der eine besonders feste Verankerung des Achsbolzens 81 in der Nabe 82 erzeugt.

### Bezugszeichenliste

- 1: Förderanlage
- 2: Förderrolle
- 3: Rollenmittelbereich
- 4: Rollenendbereich
- 5: Fördergurt
- 6: Lagertopf
- 61: Lager
- 62: Lagerinnenring
- 7: Spalt
- 8: Welle-Nabe-Baugruppe
- 81: Achsbolzen
- 811: axiales Ende
- 812: Achsbolzenbereich (812) (der in der Nabe aufgenommen wird)
- 813: Lagerbereich
- 814: Achsdrehschlussbereich
- 815: Achsbereich
- 82: Nabe
- 821: Nabenaufnahmebereich
- 83: Spreizelement
- 831: Außenumfangsbereich
- 832: Schlitz
- 833: fingerartiger Fortsatz
- D_{A}: Außendurchmesser Spreizelement im entspannten Zustand
- D_{I}: Innendurchmesser Nabe im Bereich Spreizelement
- α: Anstellwinkel

## Patentansprüche

1. Welle-Nabe-Baugruppe (8) aufweisend einen Achsbolzen (81), ein elastisch verformbares Spreizelement (83) und eine Nabe (82),
wobei der Achsbolzen (81) einen Achsbereich (815) mit einem Achsquerschnitt aufweist, der im Wesentlichen einem Nabenquerschnitt eines korrespondierenden Nabenbereichs der Nabe (82) entspricht, derart, dass der in der Nabe (82) angeordnete Achsbolzen (81) relativ zur Nabe (82) in radialer Richtung fixiert ist,
wobei der Achsbolzen (81) einen Achsdrehschlussbereich (814) aufweist und die Nabe (82) einen Nabendrehschlussbereich aufweist, wobei Achsdrehschlussbereich (814) und Nabendrehschlussbereich derart gestaltet sind, dass der in der Nabe (82) angeordnete Achsbolzen (81) relativ zu der Nabe (82) gegen Verdrehung in Umfangsrichtung fixiert ist, und
wobei das Spreizelement (83) an dem Achsbolzen (81) angeordnet ist, einen Auβenumfangsbereich (831) aufweist und derart gestaltet ist, dass der Außenumfangsbereich (831) im entspannten Zustand des Spreizelements (83) einen Außendurchmesser aufweist, der größer ist als ein Innendurchmesser eines korrespondierenden Innenumfangsbereichs der Nabe (82), wobei das Spreizelement (83), wenn der Achsbolzen (81) in der Nabe (82) angeordnet ist, derart elastisch verformt ist, dass der Außenumfangsbereich (831) des Spreizelements (83) von der entspannten Position des Spreizelements (83) in axialer Richtung des Achsbolzens (81) verlagert ist und wobei mit der axialen Verlagerung des Außenumfangsbereichs des Spreizelements (83) eine Verkleinerung des Außendurchmessers des Außenumfangsbereichs des Spreizelements (83) derart gekoppelt ist, dass der verkleinerte Außendurchmesser des Spreizelements (83) dem Innendurchmesser des korrespondierenden Innenumfangsbereichs der Nabe (82) entspricht und an diesem vorgespannt anliegt **dadurch gekennzeichnet, dass** das Spreizelement (83) und der korrespondierende Innenumfangsbereich der Nabe (82) derart gestaltet sind, dass aufgrund des Reibbeiwerts zwischen Spreizelement (83) und Innenumfangsbereich und durch einen Anstellwinkel (α) zwischen den verlagerten Bereichen des Spreizelements (83), an deren radialen Enden der Außenumfangsbereich (831) des Spreizelements (83) angeordnet ist, und dem Innenumfangsbereich des Spreizelement (83) eine Selbsthemmung des Spreizelements (83) in der Nabe (82) erzeugt wird.

2. Welle-Nabe-Baugruppe (8) nach Anspruch 1, wobei das Spreizelement (83) als Scheibe oder als bevorzugt geschlossener Ring ausgestaltet ist, wobei das Spreizelement (83) umfänglich voneinander beabstandete Schlitze (832) aufweist, welche sich vom Außenumfangsbereich (831) ausgehend im Wesentlichen radial derart nach innen erstrecken, dass der Außenumfangsbereich (831) durch die Enden einer Anzahl fingerartiger Fortsätze (833) gebildet wird, die in Umfangsrichtung durch Schlitze (832) voneinander getrennt sind.

3. Welle-Nabe-Baugruppe (8) nach einem der vorstehenden Ansprüche, wobei das Spreizelement (83) an dem Achsbolzen (81) bevorzugt an einem axialen Ende (811) des Achsbolzens (81) angeordnet ist und/oder durch Annieten, Anschweißen, Anschrauben oder eine sonstige Befestigungsart an dem Achsbolzen (81) befestigt ist.

4. Welle-Nabe-Baugruppe (8) nach einem der vorstehenden Ansprüche, wobei der Achsbolzenbereich (812) des Achsbolzens (81), der in der Nabe (82) aufgenommen wird, im Wesentlichen kreiszylindrisch ausgebildet ist und wobei der Durchmesser des Achsbolzenbereichs (812) und ein Durchmesser eines korrespondierenden Nabenaufnahmebereichs der Nabe (82) eine Schiebepassung, eine leichte Presspassung oder eine Presspassung bilden, welche z. B. die Passungen H7-g8 oder H7-p8 umfassen.

5. Welle-Nabe-Baugruppe (8) nach einem der vorstehenden Ansprüche, wobei der Durchmesser der Nabe (82) im Wesentlichen über die gesamte Einschublänge des Achsbolzens (81) denselben Durchmesser aufweist.

6. Welle-Nabe-Baugruppe (8) nach einem der Ansprüche 1 bis 3, wobei der Drehschlussbereich zwischen Achsbolzen (81) und Nabe (82) als Formschlussbereich gestaltet ist.

7. Welle-Nabe-Baugruppe (8) nach einem der vorstehenden Ansprüche, wobei das Spreizelement (83) aus Stahl hergestellt ist.

8. Welle-Nabe-Baugruppe (8) nach einem der vorstehenden Ansprüche, wobei die Nabe (82) aus einer Aluminiumlegierung hergestellt ist.

9. Förderrolle (2) für eine Förderanlage (1), welche eine Welle-Nabe-Baugruppe (8) gemäß einem der Ansprüche 1 bis 8 aufweist.

10. Förderanlage (1), welche eine Förderrolle (2) nach Anspruch 9 aufweist.

11. Förderanlage (1) nach Anspruch 10, wobei die Förderanlage (1) als Gurtförderanlage ausgebildet ist und einen Fördergurt (5) aufweist, welcher die Förderrolle (2) zumindest teilweise umschlingt.

12. Förderanlage (1) nach Anspruch 11, wobei die Förderrolle (2) auf zumindest einer Seite über einen Lagertopf (6) gelagert ist, der einen Radius aufweist, der zumindest über einen Umschlingungsbereich des Fördergurtes (5) im Wesentlichen gleich oder etwas kleiner ausgebildet ist als der Radius der Förderrolle (2) im axialen Endbereich der Förderrolle (2), wobei der Fördergurt (5) breiter ist als die Länge der Förderrolle (2) in axialer Richtung und wobei der Fördergurt (5) auf der Förderrolle (2) derart angeordnet ist, dass der Spalt (7) zwischen Förderrolle (2) und Lagertopf (6) von dem Fördergurt (5) abgedeckt wird.

13. Förderanlage (1) nach Anspruch 12, wobei der Lagertopf (6) im Umschlingungsbereich einen Radius aufweist, der zwischen 0,3 mm und 2,5 mm kleiner ist als der Radius der Förderrolle (2) im axialen Endbereich der Förderrolle (2).

14. Förderanlage (1) nach einem der Ansprüche 12 oder 13, wobei der Lagertopf (6) im Umschlingungsbereich eine Rauhtiefe von z.B. Ra 3,2 oder Ra 6,3 aufweist.

15. Förderanlage (1) nach einem der Ansprüche 12 bis 14, wobei die Förderrolle (2) ballig ausgeführt ist, wobei der Rollenmitteldurchmesser im Rollenmittelbereich (3) der Förderrolle (2) zwischen 1 mm und 2 mm, bevorzugter etwa 1,5 mm größer ist als der Rollenenddurchmesser der Förderrolle (2) in einem Rollenendbereich (4).

16. Förderanlage (1) nach einem der Ansprüche 12 bis 15, wobei zumindest ein Lager (61), über welches die Förderrolle (2) drehbar gelagert ist, in dem Lagertopf (6) aufgenommen ist.

17. Förderanlage (1) nach Anspruch 16, wobei der Achsbolzen (81) auf der dem Spreizelement (83) in axialer Richtung gegenüberliegenden Seite einen Lagerbereich (813) aufweist, der in axialer Richtung über den Rollenendbereich (4) der Förderrolle (2) übersteht und in diesem Bereich einen mit dem Lagerinnenring (62) des Wälzlagers korrespondierenden Lagerdurchmesser aufweist.

## Claims

1. A shaft-hub assembly (8), comprising an axle pin (81), an elastically deformable expansion element (83), and a hub (82),
wherein the axle pin (81) has an axle region (815) with an axle cross-section substantially corresponding to a hub cross-section of a corresponding hub region of the hub (82), such that the axle pin (81) arranged in the hub (82) is fixed in the radial direction relative to the hub (82),
wherein the axle pin (81) has an axle rotation-locking region (814) and the hub (82) has a hub rotation-locking region, wherein the axle rotation-locking region (814) an the hub rotation-locking region are designed such that the axle pin (81) arranged in the hub (82) is fixed against rotation in the circumferential direction relative to the hub (82), and
wherein the expansion element (83) is arranged at the axle pin (81), has an outer circumferential region (831) and is designed such that the outer circumferential region (831), in the relaxed state of the expansion element (83), has an outer diameter larger than an inner diameter of a corresponding inner circumferential region of the hub (82), wherein the expansion element (83), when the axle pin (81) is arranged in the hub (82), is elastically deformed such that the outer circumferential region (831) of the expansion element (83) is displaced from the relaxed position of the expansion element (83) in the axial direction of the axle pin (81), and wherein with the axial displacement of the outer circumferential region of the expansion element (83), a reduction of the outer diameter of the outer circumferential region of the expansion element (83) is coupled such that the reduced outer diameter of the expansion element (83) corresponds to the inner diameter of the corresponding inner circumferential region of the hub (82) and abuts thereon in a biased manner, **characterized in that** the expansion element (83) and the corresponding inner circumferential region of the hub (82) are designed such that due to the friction coefficient between the expansion element (83) and the inner circumferential region and due to an angle of attach (α) between the displaced regions of the expansion element (83), at the radial ends of which the outer circumferential region (831) of the expansion element (83) is arranged, and the inner circumferential region of the expansion element (83), a self-inhibition of the expansion element (83) in the hub (82) is caused.

2. The shaft-hub assembly (8) according to claim 1, wherein the expansion element (83) is formed as a disk or preferably a closed ring, wherein the expansion element (83) has mutually spaced slits (832) on its circumference, which, starting from the outer circumferential region (831), extend substantially radially inwardly such that the outer circumferential region (831) is formed by the ends of a number of finger-like projections (833) mutually separated by slits (832) in the circumferential direction.

3. The shaft-hub assembly (8) according to one of the preceding claims, wherein the expansion element (83) is arranged at the axle pin (81) preferably at an axial end (811) of the axle pin (81) and/or is fixed to the axle pin (81) by riveting, welding, screwing or another fixing method.

4. The shaft-hub assembly (8) according to one of the preceding claims, wherein the axle pin region (812) of the axle pin (81) received in the hub (82) is substantially formed in a circular-cylindrical fashion, and wherein the diameter of the axle pin region (812) and a diameter of a corresponding hub receiving region of the hub (82) form a push fit, a slight press fit or a press fit, which e.g. comprise the fittings H7-g8 or H7-p8.

5. The shaft-hub assembly (8) according to one of the preceding claims, wherein the diameter of the hub (82) has substantially the same diameter over the entire push-in length of the axle pin (81).

6. The shaft-hub assembly (8) according to one of claims 1 to 3, wherein the rotation-locking region between the axle pin (81) and the hub (82) is formed as a form-locking region.

7. The shaft-hub assembly (8) according to one of the preceding claims, wherein the expansion element (83) is made of steel.

8. The shaft-hub assembly (8) according to one of the preceding claims, wherein the hub (82) is made of an aluminium alloy.

9. A conveyor roller (2) for a conveyor installation (1), comprising a shaft-hub assembly (8) according to one of claims 1 to 8.

10. A conveyor installation (1) comprising a conveyor roller (2) according to claim 9.

11. The conveyor installation (1) according to claim 10, wherein the conveyor installation is formed as a belt conveyor installation and comprises a conveyor belt (5), which at least partly loops around the conveyor roller (2).

12. The conveyor installation (1) according to claim 11, wherein the conveyor roller (2) is supported via a bearing pot (6) on at least one side, said pot having a radius which, over at least a loop-around region of the conveyor belt (5), is formed substantially equal to or smaller than the radius of the conveyor roller (2) in the axial end region of the conveyor roller (2), wherein the conveyor belt (5) is wider than the length of the conveyor roller (2) in the axial direction, and wherein the conveyor belt (5) is arranged on the conveyor roller (2) such that the gap (7) between the conveyor roller (2) and the bearing pot (6) is covered by the conveyor belt (5).

13. The conveyor installation (1) according to claim 12, wherein in the loop-around region, the bearing pot (6) has a radius that is smaller than the radius of the conveyor roller (2) in the axial end region of the conveyor roller (2) by between 0.3 mm and 2.5 mm.

14. The conveyor installation (1) according to one of claims 12 or 13, wherein the bearing pot (6) has a roughness height of e.g. Ra 3.2 or Ra 6.3 in the loop-around region.

15. The conveyor installation (1) according to one of claims 12 to 14, wherein the conveyor roller (2) is formed in a convey fashion, wherein the mean roller diameter in the roller central region (3) of the conveyor roller (2) is greater than the roller diameter of the conveyor roller (2) in a roller end region (4) by between 1 mm and 2 mm, more preferably approx. 1.5 mm.

16. The conveyor installation (1) according to one of claims 12 to 15, wherein at least one bearing (61), via which the conveyor roller (2) is rotatably supported, is received in the bearing pot (6).

17. The conveyor installation (1) according to claim 16, wherein on the side opposite to the expansion element (83) in the axial direction, the axle pin (81) has a bearing region (813) that projects beyond the roller end region (4) of the conveyor roller (2) in the axial direction and in this region has a bearing diameter corresponding to the bearing inner ring (62) of the rolling bearing.

## Revendications

1. Groupe constitutif d'arbre et de moyeu (8) présentant un boulon d'essieu (81), un élément à expansion déformable élastiquement (83) et un moyeu (82),
dans lequel le boulon d'essieu (81) présente une zone d'essieu (815) comportant une section transversale d'essieu qui correspond sensiblement à une section transversale de moyeu d'une zone de moyeu correspondante du moyeu (2), de telle sorte que le boulon d'essieu (81) agencé dans le moyeu (82) est fixé par rapport au moyeu (82) dans la direction radiale,
dans lequel le boulon d'essieu (81) présente une zone de transmission de rotation d'essieu (814) et le moyeu (82) présente une zone de transmission de rotation de moyeu, dans lequel la zone de transmission de rotation d'essieu (814) et la zone de transmission de rotation de moyeu sont réalisées de telle sorte que le boulon d'essieu (81) agencé dans le moyeu (82) est fixé par rapport au moyeu (82) contre une rotation dans la direction circonférentielle, et
dans lequel l'élément à expansion (83) est agencé sur le boulon d'essieu (81), présente une zone circonférentielle extérieure (831) et est réalisé de telle sorte que la zone circonférentielle extérieure (831) présente dans l'état détendu de l'élément à expansion (83) un diamètre extérieur qui est plus grand qu'un diamètre intérieur d'une zone circonférentielle intérieure correspondante du moyeu (82), dans lequel l'élément à expansion (83) est, lorsque le boulon d'essieu (81) est agencé dans le moyeu (82), déformé élastiquement de telle sorte que la zone circonférentielle extérieure (831) de l'élément à expansion (83) est déportée depuis la position détendue de l'élément à expansion (83) dans la direction axiale du boulon d'essieu (81) et dans lequel une réduction du diamètre extérieur de la zone circonférentielle extérieure de l'élément à expansion (83) est accouplée avec le déport axial de la zone circonférentielle extérieure de l'élément à expansion (83) de telle sorte que le diamètre extérieur rapetissé de l'élément à expansion (83) correspond au diamètre intérieur de la zone circonférentielle intérieure correspondante du moyeu (82) et vient contacter celui-ci dans l'état précontraint, **caractérisé en ce que** l'élément à expansion (83) et la zone circonférentielle intérieure correspondante du moyeu (82) sont réalisés de telle sorte que, en raison du coefficient de friction entre l'élément à expansion (83) et la zone circonférentielle intérieure et par un angle de réglage (α) entre les zone déportées de l'élément à expansion (83), sur les extrémités radiales duquel la zone circonférentielle extérieure (831) est agencée, et la zone circonférentielle intérieure de l'élément à expansion (83), un auto blocage de l'élément à expansion (83) est généré dans le moyeu (82).

2. Groupe constitutif d'arbre et de moyeu (8), dans lequel l'élément à expansion (83) est réalisé comme disque ou comme bague de préférence fermée, dans lequel l'élément à expansion (83) présente sur toute sa circonférence des fentes agencées à distance l'une de l'autre (832), lesquelles s'étendent essentiellement radialement vers l'intérieur en partant de la zone circonférentielle extérieure (831) de telle sorte que la zone circonférentielle extérieure (831) est formée par les extrémités d'un certain nombre d'appendices en forme de doigt (833) qui sont séparés les uns des autres par les fentes (832) dans la direction circonférentielle.

3. Groupe constitutif d'arbre et de moyeu (8) selon l'une des revendications précédentes, dans lequel l'élément à expansion (83) est agencé sur le boulon d'essieu (81) de préférence sur une extrémité axiale (811) du boulon d'essieu (81) et/ou est fixé par rivetage, soudage, vissage ou par un quelconque autre mode de fixation sur le boulon d'essieu (81).

4. Groupe constitutif d'arbre et de moyeu (8) selon l'une des revendications précédentes, dans lequel la zone de boulon d'essieu (812) du boulon d'essieu (81), laquelle est réceptionnée dans le moyeu (82), est réalisée sensiblement en forme de cylindre et dans lequel le diamètre de la zone de boulon d'essieu (812) et un diamètre d'une zone correspondante de réception de moyeu du moyeu (82) forment un ajustement par poussée, un ajustement à jeu faible ou un ajustement sans jeu, lesquels comportent par exemple les ajustements H7-g8 ou H7-p8.

5. Groupe constitutif d'arbre et de moyeu (8) selon l'une des revendications précédentes, dans lequel le diamètre du moyeu (82) présente sensiblement le même diamètre sur toute la longueur d'insertion du boulon d'essieu (81).

6. Groupe constitutif d'arbre et de moyeu (8) selon l'une des revendications 1 à 3,
dans lequel la zone de transmission de rotation, entre le boulon d'essieu (81) et le moyeu (82), est réalisée comme zone à coopération de formes.

7. Groupe constitutif d'arbre et de moyeu (8) selon l'une des revendications précédentes, dans lequel l'élément à expansion (83) est fabriqué à partir d'acier.

8. Groupe constitutif d'arbre et de moyeu (8) selon l'une des revendications précédentes, dans lequel le moyeu (82) est fabriqué à partir d'un alliage d'aluminium.

9. Rouleau de convoyage (2) pour une installation de convoyage (1), lequel présente un groupe constitutif d'arbre et de moyeu (8) selon l'une des revendications 1 à 8.

10. Installation de convoyage (1), laquelle présente un rouleau de convoyage (2) selon la revendication 9.

11. Installation de convoyage (1) selon la revendication 10, dans laquelle l'installation de convoyage (1) est réalisée comme installation de convoyage à bande et présente une bande de convoyage (5), laquelle enlace au moins en partie le rouleau de convoyage (2).

12. Installation de convoyage (1) selon la revendication 11, dans laquelle le rouleau de convoyage (2) est monté sur au moins un côté par l'intermédiaire d'un logement de palier (6), qui présente un rayon qui est réalisé au moins sur une zone d'enlacement de la bande de convoyage (5) d'une manière sensiblement identique à ou légèrement plus petite que le rayon du rouleau de convoyage (2) dans la zone terminale axiale du rouleau de convoyage (2), dans laquelle la bande de convoyage (5) est plus large que la longueur du rouleau de convoyage (2) dans la direction axiale et dans laquelle la bande de convoyage (5) est agencée sur le rouleau de convoyage (2) de telle sorte que la fente (7) entre le rouleau de convoyage (2) et le logement de palier (6) est recouverte par la bande de convoyage (5).

13. Installation de convoyage (1) selon la revendication 12, dans laquelle le logement de palier (6) présente dans la zone d'enlacement un rayon qui est entre 0,3 mm et 2,5 mm plus petit que le rayon du rouleau de convoyage (2) dans la zone terminale axiale du rouleau de convoyage (2).

14. Installation de convoyage (1) selon l'une ou l'autre des revendications 12 et 13,
dans laquelle le logement de palier (6) présente dans la zone d'enlacement une profondeur de rugosité arithmétique, par exemple de 3,2 Ra ou de 6,3 Ra.

15. Installation de convoyage (1) selon l'une des revendications 12 à 14, dans laquelle le rouleau de convoyage (2) est exécuté de manière bombée, dans laquelle le diamètre moyen de rouleau dans la zone médiane de rouleau (3) du rouleau de convoyage (2) est entre 1 mm et 2 mm, de préférence d'environ 1,5 mm, plus grand que le diamètre terminal de rouleau du rouleau de convoyage (2) dans une zone terminale de rouleau (4).

16. Installation de convoyage (1) selon l'une des revendications 12 à 15, dans laquelle au moins un palier (61), par l'intermédiaire duquel le rouleau de convoyage (2) est monté avec faculté de rotation, est réceptionné dans le logement de palier (6).

17. Installation de convoyage (1) selon la revendication 16, dans laquelle le boulon d'essieu (81) présente sur le côté opposé à l'élément à expansion (83) dans la direction axiale une zone d'appui (813) qui dépasse en direction axiale au-delà de la zone terminale de rouleau (4) du rouleau de convoyage (2) et qui présente dans cette zone un diamètre de palier qui correspond à la bague intérieure de palier (62) du palier à rouleaux.
